# EUROPEAN PATENT APPLICATION

(11) **EP 4 425 633 A2**
(43) Date of publication of application: **04.09.2024**
(21) Application number: 24150948.8
(22) Date of filing: 09.01.2024
(51) Int. Cl.: H01M 10/0562, B60L 3/00, H01M 10/42, H01M 10/48, H01M 50/572

(54) **BATTERY SYSTEM AND ELECTRIFIED VEHICLE**

(30) Priority: 08.02.2023 JP 2023017509
(71) Applicant: TOYOTA JIDOSHA KABUSHIKI KAISHA, Toyota-shi, Aichi-ken, 471-8571 (JP)
(72) Inventor: HAGIWARA, Hideki, Toyota-shi, 471-8571 (JP); NAGASE, Hiroshi, Toyota-shi, 471-8571 (JP); OGUMA, Yasumasa, Toyota-shi, 471-8571 (JP); YOSHIDA, Jun, Toyota-shi, 471-8571 (JP); MIGITA, Tsubasa, Toyota-shi, 471-8571 (JP); UCHIDA, Yoshihiro, Toyota-shi, 471-8571 (JP)
(74) Representative: D Young & Co LLP

(57) **Abstract**

A battery system includes: a battery case (90); a battery (10) housed in the battery case (90), the battery (10) being composed of a sulfide-based all-solid-state battery; a first detection unit (71) located on a bottom surface (91a) of the battery case (90) inside the battery case (90) and configured to detect hydrogen sulfide; a second detection unit (72, 73) located vertically above the bottom surface (91a) inside the battery case (90) and configured to detect hydrogen sulfide; and a control device (150). The control device (150) includes an abnormality processing unit configured to perform an abnormality process based on detection results from the first detection unit (71) and the second detection unit (72, 73). The abnormality processing unit is configured to perform a first abnormality process when hydrogen sulfide is detected only by the first detection unit (71), and to perform a second abnormality process when hydrogen sulfide is detected by the second detection unit (72, 73).

## Description

### BACKGROUND OF THE INVENTION

### 1. Field of the Invention

The present disclosure relates to battery systems and electrified vehicles.

### 2. Description of Related Art

Japanese Unexamined Patent Application Publication No. 2022-46077 (JP 2022-46077 A) discloses a battery system including a secondary battery using a sulfur-based material for its positive electrode and/or solid electrolyte. This battery system cools the secondary battery with a cooler when generation of hydrogen sulfide in the secondary battery is predicted or detected.

In JP 2022-46077 A, generation of hydrogen sulfide gas from the secondary battery is detected by detecting the pressure in a battery case housing the secondary battery or the hydrogen sulfide concentration (sulfur concentration) in the battery case.

### SUMMARY OF THE INVENTION

In the configuration of JP 2022-46077 A, generation of hydrogen sulfide gas cannot be detected until hydrogen sulfide generated from the secondary battery fills the battery case and the pressure in the battery case increases or the hydrogen sulfide concentration in the battery case increases. It is desired to detect generation of hydrogen sulfide even when a small amount of hydrogen sulfide is generated from a secondary battery.

The present disclosure provides a battery system that can detect generation of hydrogen sulfide even when a small amount of hydrogen sulfide is generated from a battery.

A battery system according to a first aspect of the present disclosure includes: a battery case; a battery housed in the battery case, the battery being composed of a sulfide-based all-solid-state battery; a first detection unit located on a bottom surface of the battery case inside the battery case and configured to detect hydrogen sulfide; a second detection unit located vertically above the bottom surface inside the battery case and configured to detect hydrogen sulfide; and a control device. The control device includes an abnormality processing unit configured to perform an abnormality process based on detection results from the first detection unit and the second detection unit. The abnormality processing unit is configured to perform a first abnormality process when hydrogen sulfide is detected only by the first detection unit, and to perform a second abnormality process when hydrogen sulfide is detected by the second detection unit.

In this configuration, the battery is composed of a sulfide-based all-solid-state battery. In the present disclosure, a sulfide-based all-solid-state battery refers to an all-solid-state battery in which either the material of a positive electrode or the material of a solid electrolyte, or both of the material of a positive electrode and the material of a solid electrolyte contain a sulfur component. The first detection unit configured to detect hydrogen sulfide is located on the bottom surface of the battery case, and the second detection unit configured to detect hydrogen sulfide is located vertically above the bottom surface. The abnormality processing unit of the control device performs the abnormality process based on the detection results from the first detection unit and the second detection unit. The abnormality processing unit performs the first abnormality process when hydrogen sulfide is detected only by the first detection unit. The abnormality processing unit performs the second abnormality process when hydrogen sulfide is detected by the second detection unit.

When the sulfur component in the sulfide-based all-solid-state battery reacts with moisture, hydrogen sulfide may be generated. Since hydrogen sulfide is heavier than air, it stays at the bottom of the battery case. The first detection unit is located on the bottom surface of the battery case. Therefore, even when a small amount of hydrogen sulfide is generated from the battery, the first detection unit can detect hydrogen sulfide staying at the bottom of the battery case. The abnormality detection unit can therefore perform the first abnormality process when hydrogen sulfide is detected only by the first detection unit. The first abnormality process may be the form of the abnormality process that is performed when a small amount of hydrogen sulfide is generated.

When a large amount of hydrogen sulfide is generated from the battery, the battery case is filled with the hydrogen sulfide. When the battery case is filled with hydrogen sulfide, the second detection unit located vertically above the bottom surface detects hydrogen sulfide. The abnormality detection unit can therefore perform the second abnormality process when hydrogen sulfide is detected by the second detection unit. The second abnormality process may be the form of the abnormal process that is performed when a large amount of hydrogen sulfide is generated.

In the battery system according to the first aspect of the present disclosure, the abnormality processing unit may be configured to perform the second abnormality process when hydrogen sulfide is detected by the first detection unit and the second detection unit.

According to this configuration, it is possible to more reliably detect that the battery case is filled with hydrogen sulfide.

The battery system according to the first aspect of the present disclosure may further include a communication passage configured to allow communication between inside and outside of the battery case, and the second detection unit may be located inside the communication passage.

According to this configuration, the second detection unit located vertically above the bottom surface of the battery case may be located inside the communication passage configured to allow communication between the inside and outside of the battery case. When the battery case is filled with hydrogen sulfide generated from the battery, the hydrogen sulfide may be discharged out of the battery case through the communication passage. Since the second detection unit may detect hydrogen sulfide being discharged out of the battery case through the communication passage, it can be reliably detected that the battery case is filled with hydrogen sulfide.

The battery system according to the first aspect of the present disclosure may further include: a communication passage configured to allow communication between inside and outside of the battery case; and a desulfurization agent that is located inside the communication passage and that is configured to adsorb hydrogen sulfide.

According to this configuration, when air containing hydrogen sulfide is discharged out of the battery case through the communication passage, the hydrogen sulfide is removed (adsorbed) by the desulfurization agent. Accordingly, the hydrogen sulfide is less likely to be released into outside air.

The battery system according to the first aspect of the present disclosure may further include an on-off valve located in the communication passage, and the second abnormality process may include opening the on-off valve to allow communication between the inside and the outside of the battery case through the communication passage.

According to this configuration, when a large amount of hydrogen sulfide is generated and the second abnormality process is performed, the on-off valve located in the communication passage may be opened. Accordingly, when air containing hydrogen sulfide is discharged out of the battery case through the communication passage, the hydrogen sulfide is removed (adsorbed) by the desulfurization agent. The hydrogen sulfide is therefore less likely to be released into outside air.

The battery system according to the first aspect of the present disclosure may further include a sub-communication passage configured to always allow communication between the inside and the outside of the battery case.

According to this configuration, the sub-communication passage can reduce an increase in internal pressure of the battery case.

In the battery system according to the first aspect of the present disclosure, the battery case may be mounted on an electrified vehicle, the battery may be a power source for the electrified vehicle, the first abnormality process may be a retreat travel process of causing the electrified vehicle to perform retreat travel, and the second abnormality process may be a system shutdown process of stopping travel of the electrified vehicle.

According to this configuration, when a small amount of hydrogen sulfide is generated from the battery, the retreat travel process of causing the electrified vehicle to perform retreat travel may be performed by the first abnormality process. In the present disclosure, the term "retreat travel" may refer to limiting the driving force and/or the vehicle speed. However, the retreat travel may be to allow the electrified vehicle to travel to a repair shop and/or a predetermined safe place or to allow the electrified vehicle to travel within a predetermined distance or within a predetermined time.

When a large amount of hydrogen sulfide is generated from the battery, the system shutdown process of stopping the electrified vehicle may be performed by the second abnormality process. In the present disclosure, the system shutdown process may be to immediately reduce the driving force for the electrified vehicle to zero so as not to allow the electrified vehicle to travel. When the system shutdown process is performed, the driving force may be generated for a short period of time so that the electrified vehicle does not stop on the road.

In the battery system according to the first aspect of the present disclosure, the second abnormality process may include a notification process of giving a notification to outside of the electrified vehicle.

According to this configuration, it is possible to notify those around the electrified vehicle of generation of a large amount of hydrogen sulfide from the battery.

In the battery system according to the first aspect of the present disclosure, the battery may be a laminated all-solid-state battery including a laminated film as an exterior member.

For a laminated all-solid-state battery, there is a concern that a sealed portion of the laminated film tends to be broken especially at positions of a negative terminal and a positive terminal. When the seal is broken, air enters the all-solid-state battery through the broken seal. If this air contains moisture, the sulfur component in the all-solid state battery may react with the moisture to generate hydrogen sulfide. Even when the generated hydrogen sulfide is discharged little by little through the broken seal, the first detection unit can detect the generation of hydrogen sulfide.

An electrified vehicle according to a second aspect of the present disclosure may include the battery system according to the first aspect of the present disclosure. The battery case may be mounted on the electrified vehicle, and the battery may be a power source for the electrified vehicle. The first abnormality process may be a retreat travel process of causing the electrified vehicle to perform retreat travel. The second abnormality process may be a system shutdown process of stopping travel of the electrified vehicle.

According to the present disclosure, generation of hydrogen sulfide can be detected even when a small amount of hydrogen sulfide is generated from the battery.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically shows an overall configuration of an electrified vehicle equipped with a battery system according to an embodiment;
FIG. 2 is a perspective view of a battery;
FIG. 3 shows a schematic configuration of the battery;
FIG. 4A illustrates a schematic configuration of a cell;
FIG. 4B illustrates a schematic configuration of the cell;
FIG. 5A illustrates a method for stacking unit cells;
FIG. 5B illustrates a method for stacking unit cells;
FIG. 6 is a flowchart showing an example of abnormality process control that is performed by an electronic control unit (ECU);
FIG. 7 is a flowchart showing an example of abnormality process control that is performed by the ECU in a first modification; and
FIG. 8 shows a schematic configuration of a battery in a second modification.

### DETAILED DESCRIPTION OF EMBODIMENTS

An embodiment of the present disclosure will be described in detail below with reference to the drawings. The same or corresponding portions are denoted by the same signs throughout the drawings, and description thereof will not be repeated.

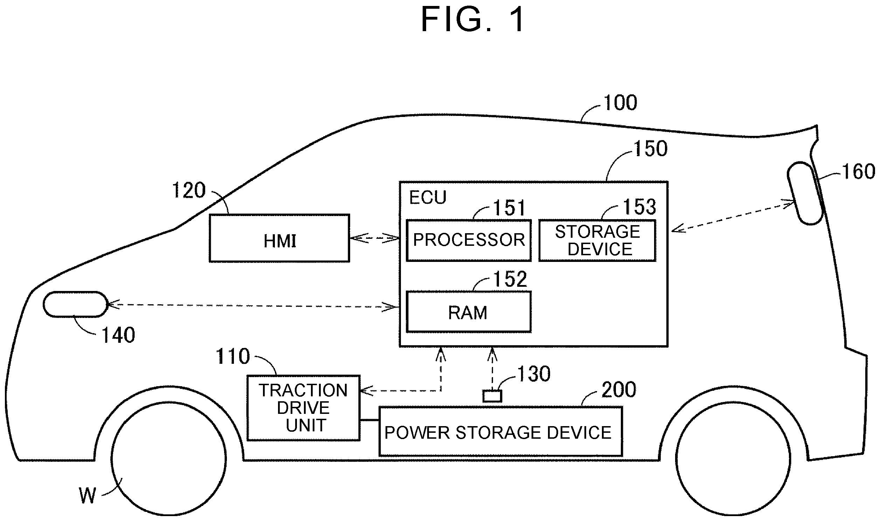

FIG. 1 schematically shows an overall configuration of an electrified vehicle 100 equipped with a battery system according to an embodiment. The electrified vehicle 100 includes a power storage device 200 that stores power for moving the electrified vehicle 100. The electrified vehicle 100 is configured to run on the power stored in the power storage device 200. In the present embodiment, the electrified vehicle 100 is a battery electric vehicle (BEV) without an engine (internal combustion engine). However, the electrified vehicle 100 may be a hybrid electric vehicle (HEV) or a plug-in hybrid electric vehicle (PHEV) with an engine.

The electrified vehicle 100 includes a control device (electronic control unit (ECU)) 150. The ECU 150 is configured to perform charge control and discharge control of the power storage device 200. The ECU 150 includes a processor 151, a random access memory (RAM) 152, and a storage device 153. The ECU 150 may be a computer. The processor 151 may be a central processing unit (CPU). The RAM 152 functions as a working memory for temporarily storing data that is processed by the processor 151. The storage device 153 is configured to save stored information. The storage device 153 stores programs and information to be used in the programs (e.g., maps, mathematical expressions, and various parameters). Various controls in the ECU 150 are performed by the processor 151 executing the programs stored in the storage device 153. The ECU 150 performs abnormality process control that will be described later. In the present embodiment, the battery system is composed of the power storage device 200 and the ECU 150.

A monitoring module 130 includes various sensors that detect the state (e.g., voltage, current, and temperature) of the power storage device 200. The monitoring module 130 outputs the detection results of the sensors to the ECU 150. The monitoring module 130 may be a battery management system (BMS) that has a state of charge (SOC) estimation function, a state of health (SOH) estimation function, a cell voltage equalization function, a diagnostic function, and a communication function in addition to the above sensor functions. The ECU 150 can acquire the state (e.g., temperature, current, voltage, SOC, and internal resistance) of the power storage device 200 based on the output of the monitoring module 130. The power storage device 200 is charged (externally charged) with power supplied from charging equipment.

The electrified vehicle 100 further includes a traction drive unit 110, a human-machine interface (HMI) device 120, hazard lights 140, an external display 160, and drive wheels W. The traction drive unit 110 includes a power control unit (PCU) and a motor generator (MG), both not shown, and is configured to cause the electrified vehicle 100 to travel with power stored in the power storage device 200. The PCU includes, for example, an inverter, a converter, and a relay (hereinafter referred to as "system main relay (SMR)"). The PCU is controlled by the ECU 150. For example, the MG is a three-phase alternating current motor generator. The MG is configured to be driven by the PCU to rotate the drive wheels W. The PCU drives the MG with power supplied from the power storage device 200. The MG is also configured to regeneratively generate power and supply the generated power to the power storage device 200. The SMR is configured to connect and disconnect a power path from the power storage device 200 to the PCU. The SMR is closed (connected) when the electrified vehicle 100 is traveling.

The HMI device 120 includes an input device and a display device. The HMI device 120 may include a touch panel display. The hazard lights 140 are lights mounted on the four corners of the electrified vehicle 100. The hazard lights 140 are the same lights as turn signals, and serve as emergency flashers. The external display 160 is, for example, a light-emitting diode (LED) display. The external display 160 is mounted on a rear windshield so that the displayed content can be seen from outside the electrified vehicle 100.

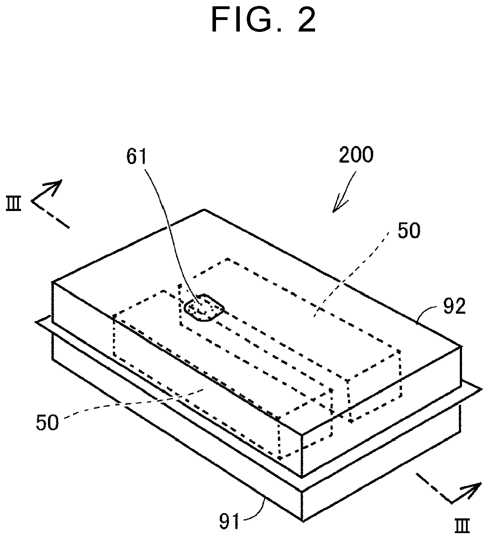

FIG. 2 is a perspective view of the power storage device 200. The power storage device 200 includes a battery case 90 and a battery module 50 stored in the battery case 90. The battery case 90 includes a lower case 91 and an upper case 92. In the present embodiment, two battery modules 50 are stored in the space formed by the lower case 91 and the upper case 92. The upper case 92 is provided with a breathable film 61. The breathable film 61 will be described later. The power storage device 200 is mounted on the floor of the electrified vehicle 100. The power storage device 200 may be installed inside a vehicle cabin of the electrified vehicle 100 or may be installed outside the vehicle cabin of the electrified vehicle 100.

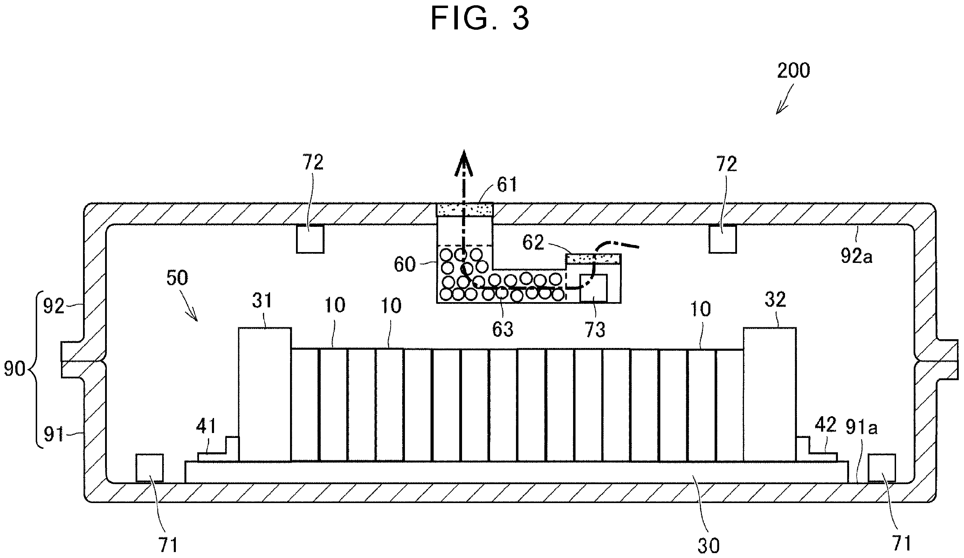

FIG. 3 shows a schematic configuration of the power storage device 200. FIG. 3 shows a section taken along line III-III in FIG. 2. The battery module 50 is a battery pack composed of a plurality of cells 10 connected together. The cells 10 are stacked between a pair of end plates 31, 32.

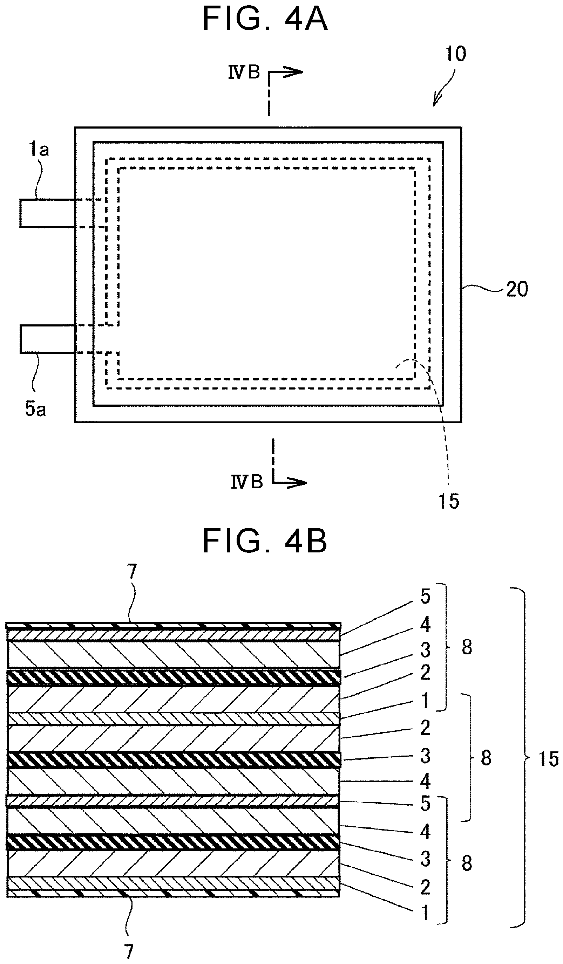

FIGS. 4A and 4B show a schematic configuration of the cell 10 according to the present embodiment. FIG. 4A is a top view of the cell 10. The cell 10 is a laminated all-solid-state battery using a laminated film as an exterior member 20. A negative terminal (negative electrode tab) 1a and a positive terminal (positive electrode tab) 5a protrude from the exterior member 20. For example, the laminated film may be a pouch made of an aluminum laminated film, or may be a three-layer film composed of resin films and aluminum foil interposed therebetween.

FIG. 4B shows an all-solid-state battery stack 15 enclosed in the exterior member 20. FIG. 4B shows a section taken along line IVB-IVB in FIG. 4A. The all-solid-state battery stack 15 is a stack of three all-solid-state battery elements 8. Each all-solid-state battery element 8 is composed of a negative electrode current collector layer 1, a negative electrode active material layer 2, a solid electrolyte layer 3, a positive electrode active material layer 4, and a positive electrode current collector layer 5 that are stacked in this order. The three all-solid-state battery elements 8 are stacked such that the middle all-solid-state battery element 8 shares the negative electrode current collector layer 1 and the positive electrode current collector layer 5 with the other two all-solid-state battery elements 8, and that the order in which the layers are stacked in the middle all-solid-state battery element 8 is opposite to that in the other two all-solid-state battery elements 8. The negative electrode current collector layers 1 are connected to the negative terminal 1a, and the positive electrode current collector layers 5 are connected to the positive terminal 5a. The number of all-solid-state battery elements 8 in the all-solid-state battery stack 15 may be one, or may be four or more. Insulation films 7 provide insulation between the all-solid-state battery stack 15 and the exterior member (laminated film) 20.

The cell 10 is a sulfide-based all-solid-state battery. In the present disclosure, a sulfide-based all-solid-state battery refers to an all-solid-state battery in which either or both of the material of the positive electrode active material layer 4 and the material of the solid electrolyte layer 3 contain a sulfur component. In the present embodiment, the solid electrolyte layer 3 contains a sulfide-based solid electrolyte. For example, the sulfide-based solid electrolyte may be a solid electrolyte whose starting material is phosphorus pentasulfide (P₂S₅) or lithium sulfide (Li₂S). In this case, the positive electrode active material layer 4 may contain, for example, lithium cobalt oxide, lithium nickel oxide, or lithium iron phosphate. When the solid electrolyte layer 3 is composed of an oxide-based solid electrolyte, the positive electrode active material layer 4 is composed of a sulfur-based positive electrode active material. The sulfur-based positive electrode active material may be an organic sulfur compound or an inorganic sulfur compound. Both the solid electrolyte layer 3 and the positive electrode active material layer 4 may contain a sulfur component.

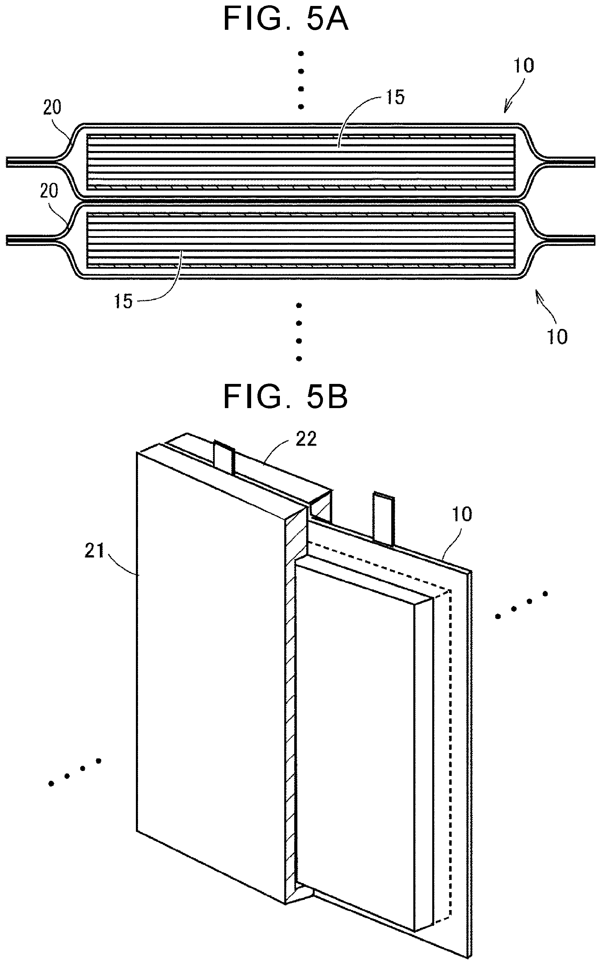

Referring to FIG. 3, the cells 10 are stacked between the end plates 31, 32. FIGS. 5A and 5B illustrate a method for stacking the cells 10. The cells 10 are in the form of a flat plate. As shown in FIG. 5A, the cells 10 may be stacked such that the exterior members 20 of the cells 10 contact each other. Alternatively, the cells 10 may be stacked with spacers in the form of a flat plate (not shown) interposed between the cells 10. As shown in FIG. 5B, a pair of frames 21, 22 having inner surfaces conforming to the outer shape of the cell 10 may be used to cover the cell 10, and the cells 10 each covered with the frames 21, 22 may be stacked together.

Referring back to FIG. 3, the cells 10 are stacked between the end plates 31, 32 and are subjected to a predetermined restraint load by a restraint band, not shown, etc. The end plates 31, 32 are fixed to a bottom plate 30 by brackets 41, 42.

The battery module 50 composed of the cells 10 stacked between the end plates 31, 32, the bottom plate 30, etc. is fixed to a bottom surface 91a of the lower case 91. The battery case 90 is a housing that houses the battery modules 50.

The upper case 92 is provided with a duct 60. The duct 60 is a communication passage that allows communication between the inside and outside of the battery case 90. When the internal pressure of the battery case 90 increases, air is forced out of the battery case 90 through the duct 60. When the internal pressure of the battery case 90 decreases, air outside the battery case 90 (outside air) is forced into the battery case 90 through the duct 60. The duct 60 is attached to an opening formed in a ceiling surface 92a of the upper case 92.

Breathable films 61, 62 are disposed at the ends of the duct 60. The breathable films 61, 62 are air-permeable waterproof (moisture-permeable waterproof) sheets. For example, the air-permeable waterproof sheets may be GORE-TEX (registered trademark). A desulfurization agent 63 is placed inside the duct 60. For example, the desulfurization agent 63 may be in the form of pellets mainly containing iron oxide. The desulfurization agent 63 chemically adsorbs hydrogen sulfide. When the internal pressure of the battery case 90 increases, air is forced out of the battery case 90 through the duct 60 as shown by a long dashed short dashed arrow. At this time, the desulfurization agent 63 chemically adsorbs hydrogen sulfide in the air. The hydrogen sulfide is thus removed. As described above, the duct 60 has a function as a desulfurization unit.

A plurality of hydrogen sulfide sensors is disposed inside the battery case 90. The hydrogen sulfide sensors are sensors configured to detect the concentration of hydrogen sulfide (H₂S) in the atmosphere. The hydrogen sulfide sensors output signals indicating their detection results to the ECU 150. The hydrogen sulfide sensors may be, for example, hot wire semiconductor sensors or constant potential electrolysis sensors. In the present embodiment, first hydrogen sulfide sensors 71 are disposed on the bottom surface of the battery case 90, second hydrogen sulfide sensors 72 are disposed on the ceiling surface of the battery case 90, and a third hydrogen sulfide sensor 73 is disposed inside the duct 60.

Specifically, a plurality of first hydrogen sulfide sensors 71 is disposed around the battery modules 50 on the bottom surface 91a of the lower case 91. The number of first hydrogen sulfide sensors 71 may be one. A plurality of second hydrogen sulfide sensors 72 is disposed on the ceiling surface 92a of the upper case 92. The number of second hydrogen sulfide sensors 72 may be one. A third hydrogen sulfide sensor 73 is disposed inside the duct 60 at a position closer to the inside of the battery case 90 than the desulfurization agent 63. The second hydrogen sulfide sensors 72 and the third hydrogen sulfide sensor 73 are disposed above (vertically above) the first hydrogen sulfide sensors 71. The expression "vertically above" is herein used on the assumption that the lower case 91 is disposed with its bottom surface 91a horizontal. The first hydrogen sulfide sensors 71 are an example of the "first detection unit" of the present disclosure, and the second hydrogen sulfide sensors 72 and the third hydrogen sulfide sensor 73 are an example of the "second detection unit" of the present disclosure.

The cell 10 of the present embodiment is a laminated all-solid-state battery, and there is a concern that the sealed portion of the exterior member 20 (laminated film) tends to be broken especially at positions of the negative terminal 1a and the positive terminal 5a. When the seal is broken, air enters through the broken seal. If this air contains moisture, the sulfur component contained in the solid electrolyte layers 3 or the positive electrode active material layers 4 reacts with the moisture to generate hydrogen sulfide. The amount of hydrogen sulfide that is generated due to the broken seal is typically small. When the cell 10 is exposed to a very high temperature and the sulfur component contained in the solid electrolyte layers 3 or the positive electrode active material layers 4 reacts with moisture for some reason, a large amount of hydrogen sulfide is generated.

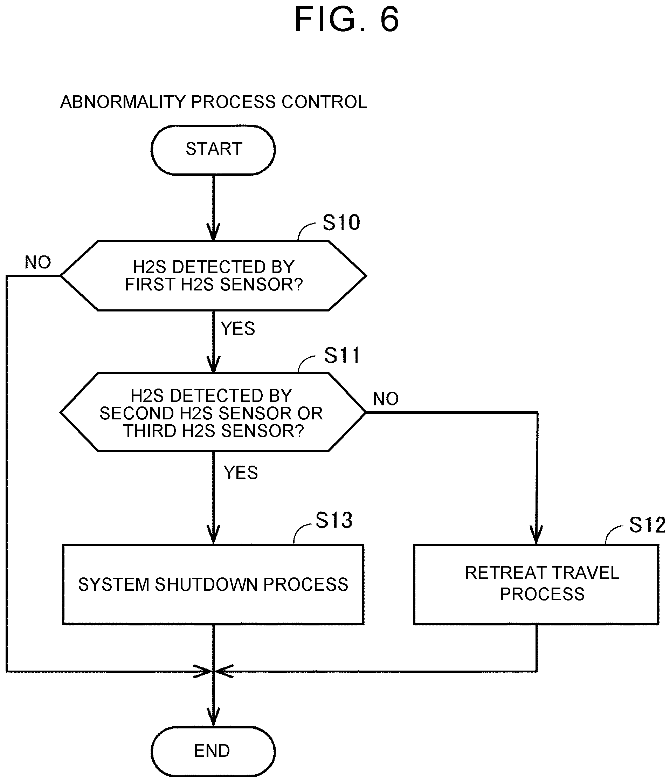

In the present embodiment, generation of a small amount of hydrogen sulfide due to a broken seal etc. and generation of a large amount of hydrogen sulfide at high temperature are detected based on detection signals from the hydrogen sulfide sensors disposed inside the battery case 90, and an abnormality process is performed. FIG. 6 is a flowchart showing an example of abnormality process control that is performed by the ECU 150. The process of this flowchart is repeatedly performed at predetermined intervals by an abnormality processing unit. The abnormality processing unit is a functional block configured in the ECU 150.

In step (hereinafter, the term "step" is abbreviated as "S") 10, it is determined whether hydrogen sulfide is detected by the first hydrogen sulfide sensors 71. The first, second, and third hydrogen sulfide sensors 71, 72, and 73 output signals indicating the concentration of hydrogen sulfide to the ECU 150. The ECU 150 (abnormality processing unit) identifies the concentration of hydrogen sulfide from the received detection signals, and determines that hydrogen sulfide is detected when the identified concentration is higher than a threshold. Since hydrogen sulfide normally is not present in the battery case 90, the threshold may be the lower detection limit of the hydrogen sulfide sensors. When setting the threshold, an increase in baseline of the detection level of the hydrogen sulfide sensors due to miscellaneous gases other than hydrogen sulfide (H₂S) may be considered.

When hydrogen sulfide is detected by at least one of the first hydrogen sulfide sensors 71, the determination in S 10 is YES, and the routine proceeds to S11. When hydrogen sulfide is not detected by any of the first hydrogen sulfide sensors 71, the determination in S10 is NO, and the current routine ends.

In S11, it is determined whether hydrogen sulfide is detected by the second hydrogen sulfide sensors 72 or the third hydrogen sulfide sensor 73. When hydrogen sulfide is not detected by any of the second hydrogen sulfide sensors 72 and the third hydrogen sulfide sensor 73, the determination is NO, and the routine proceeds to S12. When hydrogen sulfide is detected by at least one of the second hydrogen sulfide sensors 72, or when hydrogen sulfide is detected by the third hydrogen sulfide sensor 73, the determination is YES, and the routine proceeds to S13.

When YES in S10 and NO in S11, hydrogen sulfide is detected only by the first hydrogen sulfide sensor(s) 71 disposed on the bottom surface of the battery case 90, and it can be determined that hydrogen sulfide has been generated due to a broken seal. Therefore, a retreat travel process is performed in S12. In the present embodiment, the retreat travel process limits the MG output of the traction drive unit 110. This hinders normal traveling of the electrified vehicle 100, but allows the electrified vehicle 100 to travel to a repair shop and/or a predetermined safe place (e.g., a storage place (parking lot) for the electrified vehicle 100). The retreat travel process may be a control that allows the electrified vehicle 100 to travel within a predetermined distance or within a predetermined time from when S12 is first performed, and prohibits the electrified vehicle 100 from traveling when the predetermined distance or the predetermined time is exceeded. A message saying that the "battery is abnormal" and the "vehicle needs to be taken to a repair shop" is displayed on the HMI device 120. The current routine ends after S12.

When YES in both S10 and S11, it means that the generated amount of hydrogen sulfide is so large that the battery case 90 is filled with the hydrogen sulfide and the hydrogen sulfide is detected by the second hydrogen sulfide sensor(s) 72 or the third hydrogen sulfide sensor 73. Therefore, a system shutdown process is performed in S13. In the present embodiment, the system shutdown process opens (disconnects) the SMR to disconnect the power path from the power storage device 200 to the PCU. Therefore, when the system shutdown process is performed while the electrified vehicle 100 is traveling, the electrified vehicle 100 stops. The system shutdown process also flashes the hazard lights 140 and displays a message saying "caution (hydrogen sulfide)" on the external display 160. A message saying the "system shutdown process activated" and requesting to "pull over to shoulder" is displayed on the HMI device 120. After displaying "system shutdown process activated" and "pull over to shoulder" on the HMI device 120, the disconnection of the SMR may be delayed by a short period of time enough to pull over the electrified vehicle 100 to the shoulder so that the electrified vehicle 100 does not stop on the road. The current routine ends after S13.

Since hydrogen sulfide is heavier than air, it stays at the bottom of the battery case 90. According to the present embodiment, the first hydrogen sulfide sensors 71 are disposed on the bottom surface of the battery case 90. Therefore, even when a small amount of hydrogen sulfide is generated from the cell 10, the first hydrogen sulfide sensors 71 can detect hydrogen sulfide staying at the bottom of the battery case 90. When a large amount of hydrogen sulfide is generated from the cell 10, the battery case 90 is filled with the hydrogen sulfide. When the battery case 90 is filled with hydrogen sulfide, the second hydrogen sulfide sensors 72 or third hydrogen sulfide sensor 73 disposed vertically above the bottom surface of the battery case 90 detects hydrogen sulfide.

According to the present embodiment, the retreat travel process is performed when a small amount of hydrogen sulfide is generated from the cell 10 and hydrogen sulfide is detected only by the first hydrogen sulfide sensor(s) 71. The retreat travel process is an example of the "first abnormality process" of the present disclosure. According to the present embodiment, the system shutdown process is performed when a large amount of hydrogen sulfide is generated from the cell 10 and hydrogen sulfide is detected by the second hydrogen sulfide sensor(s) 72 or the third hydrogen sulfide sensor 73. The system shutdown process is an example of the "second abnormality process" of the present disclosure. A retreat travel is enabled when a small amount of hydrogen sulfide is generated from the cell 10, and the electrified vehicle 100 is immediately stopped when a large amount of hydrogen sulfide is generated from the cell 10. Appropriate measures can thus be taken depending on the amount of hydrogen sulfide generated from the cell 10.

In the above embodiment, in S11, whether hydrogen sulfide is detected by the third hydrogen sulfide sensor 73 is determined in addition to whether hydrogen sulfide is detected by the second hydrogen sulfide sensors 72. However, the third hydrogen sulfide sensor 73 disposed in the duct 60 may be omitted, and whether hydrogen sulfide is detected by the second hydrogen sulfide sensors 72 may be determined in S11.

In the above embodiment, in S11, whether hydrogen sulfide is detected by the second hydrogen sulfide sensors 72 is determined in addition to whether hydrogen sulfide is detected by the third hydrogen sulfide sensor 73. However, the second hydrogen sulfide sensors 72 may be omitted, and whether hydrogen sulfide is detected by the third hydrogen sulfide sensor 73 disposed in the duct 60 may be determined in S11.

The above embodiment illustrates an example in which the battery system (power storage device 200 and ECU 150) is mounted on the electrified vehicle 100. The battery system may be a stationary energy storage device. In this case, the charging and discharging power of the power storage device 200 may be limited (first abnormality process) in S12, and charging and discharging of the power storage device 200 may be stopped and an alarm sound may be emitted to the outside in S13.

In the above embodiment, the first hydrogen sulfide sensors 71 are disposed on the bottom surface of the battery case 90, and the second hydrogen sulfide sensors 72 are disposed on the ceiling surface of the battery case 90. However, a first sampling passage that is open to the bottom surface of the battery case 90 and a second sampling passage that is open to the ceiling surface of the battery case 90 may be provided, and the first and second sampling passages may be connected to hydrogen sulfide sensors. Hydrogen sulfide at the bottom of the battery case 90 can be detected from gas (air) introduced into the hydrogen sulfide sensor through the first sampling passage, and hydrogen sulfide filling the battery case 90 can be detected from gas introduced to the hydrogen sulfide sensor through the second sampling passage. In this case, the first sampling passage that is open to the bottom surface of the battery case 90 corresponds to the "first detection unit" of the present disclosure, and the second sampling passage that is open to the ceiling surface of the battery case 90 corresponds to the "second detection unit" of the present disclosure.

### First Modification

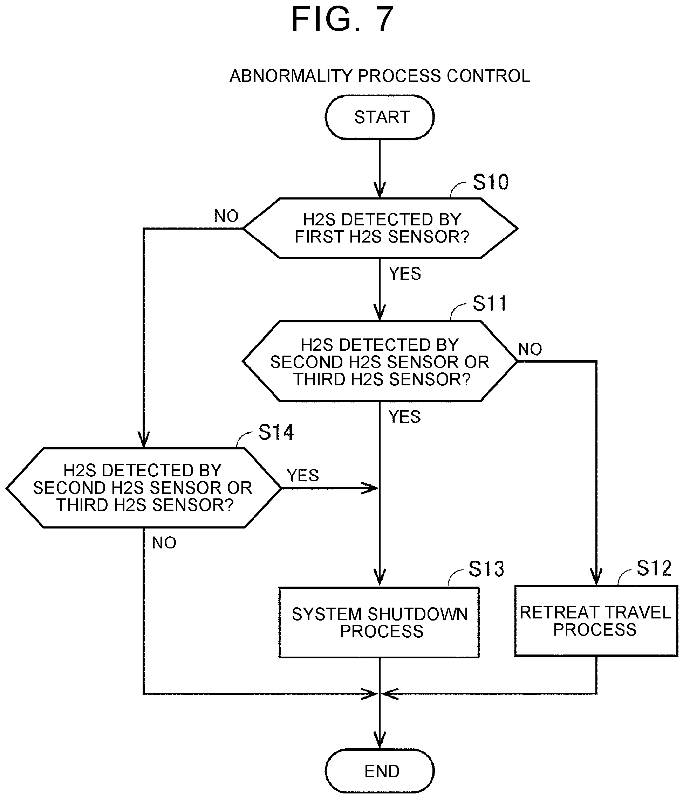

FIG. 7 is a flowchart showing an example of abnormality process control that is performed by the ECU 150 in a first modification. The process of this flowchart is repeatedly performed at predetermined intervals by the abnormality processing unit that is a functional block configured in the ECU 150. This process is different from the process of the flowchart of the above embodiment in that S14 is added to the flowchart of the above embodiment.

S14 is performed when NO in S10. In S14, it is determined whether hydrogen sulfide is detected by the second hydrogen sulfide sensors 72 or the third hydrogen sulfide sensor 73. When hydrogen sulfide is not detected by any of the second hydrogen sulfide sensors 72 and the third hydrogen sulfide sensor 73, the determination is NO, and the current routine ends. When hydrogen sulfide is detected by at least one of the second hydrogen sulfide sensors 72, or when hydrogen sulfide is detected by the third hydrogen sulfide sensor 73, the determination is YES, and the routine proceeds to S13.

According to the first modification, even if hydrogen sulfide cannot be detected by the first hydrogen sulfide sensors 71 due to some error etc., the system shutdown process (second abnormality process) can be performed when a large amount of hydrogen sulfide is generated from the cell 10 and the battery case 90 is filled with hydrogen sulfide.

### Second Modification

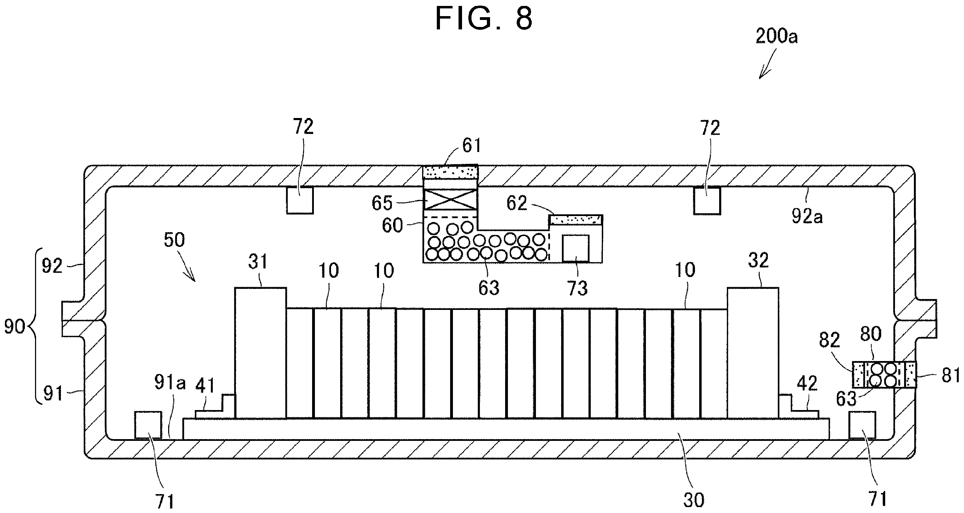

FIG. 8 shows a schematic configuration of a power storage device 200a in a second modification. The power storage device 200a is different from the power storage device 200 of the above embodiment in that the power storage device 200a includes a solenoid on-off valve 65 and a sub-duct 80.

The solenoid on-off valve 65 opens and closes the duct 60. The solenoid on-off valve 65 is a normally closed solenoid valve. The solenoid on-off valve 65 opens in response to an opening signal from the ECU 150.

The sub-duct 80 is a communication passage that allows communication between the inside and outside of the battery case 90. When the internal pressure of the battery case 90 increases, air is forced out of the battery case 90 through the sub-duct 80. When the internal pressure of the battery case 90 decreases, air outside the battery case 90 (outside air) is forced into the battery case 90 through the sub-duct 80. The sub-duct 80 is attached to an opening formed in a side surface of the lower case 91.

Breathable films 81, 82 are disposed at the ends of the sub-duct 80, and a desulfurization agent 63 in the form of pellets is placed inside the sub-duct 80. The breathable films 81, 82 are air-permeable waterproof (moisture-permeable waterproof) sheets. The sub-duct 80 is a communication passage that always allows communication between the inside and outside of the battery case 90. The sub-duct 80 corresponds to the "sub-communication passage" of the present disclosure.

In the second modification as well, the abnormality process control shown in FIG. 6 is performed by the ECU 150 as in the above embodiment. In the second modification, in the system shutdown process of S13, an opening signal is output to the solenoid on-off valve 65, and the solenoid on-off valve 65 opens in response to the opening signal. Accordingly, in the second modification, when a large amount of hydrogen sulfide is generated from the cell 10 and the system shutdown process is performed, air is discharged out of the battery case 90 through the duct 60 in addition to through the sub-duct 80. That is, the system shutdown process (second abnormality process) includes opening the solenoid on-off valve 65 to allow communication between the inside and outside of the battery case 90 through the duct 60. At this time, the desulfurization agents 63 chemically adsorb hydrogen sulfide in the air. The hydrogen sulfide is thus removed.

The embodiment disclosed herein should be construed as illustrative in all respects and not restrictive. The scope of the present disclosure is set forth in the claims rather than in the above description of the embodiment, and is intended to include all modifications within the meaning and scope equivalent to those of the claims.

## Claims

1. A battery system comprising:
a battery case (90);
a battery (10) housed in the battery case (90), the battery (10) being composed of a sulfide-based all-solid-state battery;
a first detection unit (71) located on a bottom surface (91a) of the battery case (90) inside the battery case (90) and configured to detect hydrogen sulfide;
a second detection unit (72, 73) located vertically above the bottom surface (91a) inside the battery case (90) and configured to detect hydrogen sulfide; and
a control device (150), wherein
the control device (150) includes an abnormality processing unit configured to perform an abnormality process based on detection results from the first detection unit (71) and the second detection unit (72, 73), and
the abnormality processing unit is configured to perform a first abnormality process when hydrogen sulfide is detected only by the first detection unit (71), and to perform a second abnormality process when hydrogen sulfide is detected by the second detection unit (72, 73).

2. The battery system according to claim 1, wherein the abnormality processing unit is configured to perform the second abnormality process when hydrogen sulfide is detected by the first detection unit (71) and the second detection unit (72, 73).

3. The battery system according to claim 1, further comprising a communication passage (60) configured to allow communication between inside and outside of the battery case (90), wherein the second detection unit (73) is located inside the communication passage (60).

4. The battery system according to claim 1, further comprising:
a communication passage (60) configured to allow communication between inside and outside of the battery case (90); and
a desulfurization agent (63) that is located inside the communication passage (60) and that is configured to adsorb hydrogen sulfide.

5. The battery system according to claim 4, further comprising an on-off valve (65) located in the communication passage, wherein the second abnormality process includes opening the on-off valve (65) to allow communication between the inside and the outside of the battery case (90) through the communication passage (60).

6. The battery system according to claim 5, further comprising a sub-communication passage (80) configured to always allow communication between the inside and the outside of the battery case (90).

7. The battery system according to any one of claims 1 to 6, wherein:
the battery case (90) is mounted on an electrified vehicle (100), and the battery (10) is a power source for the electrified vehicle (100);
the first abnormality process is a retreat travel process of causing the electrified vehicle (100) to perform retreat travel; and
the second abnormality process is a system shutdown process of stopping travel of the electrified vehicle (100).

8. The battery system according to claim 7, wherein the second abnormality process includes a notification process of giving a notification to outside of the electrified vehicle (100).

9. The battery system according to claim 8, wherein the battery (10) is a laminated all-solid-state battery including a laminated film as an exterior member (20).

10. An electrified vehicle (100) comprising the battery system according to any one of claims 1 to 6, wherein:
the battery case (90) is mounted on the electrified vehicle (100), and the battery (10) is a power source for the electrified vehicle (100);
the first abnormality process is a retreat travel process of causing the electrified vehicle (100) to perform retreat travel; and
the second abnormality process is a system shutdown process of stopping travel of the electrified vehicle (100).
